# EUROPÄISCHE PATENTSCHRIFT

(11) **EP 3 322 054 B1**
(45) Veröffentlichungstag und Bekanntmachung des Hinweises auf die Patenterteilung: **03.06.2020**
(21) Anmeldenummer: 16199002.3
(22) Anmeldetag: 15.11.2016
(51) Int. Cl.: H02G 1/12

(54) **VORRICHTUNG UND VERFAHREN ZUM ENTFERNEN EINER INNEREN UMHÜLLUNG ELEKTRISCHER LEITER**
APPARATUS AND METHOD FOR REMOVING AN INTERNAL ENVELOPE FROM AN ELECTRICAL CONDUCTOR
DISPOSITIF ET PROCÉDÉ DESTINÉS À ENLEVER UNE GAINE INTÉRIEURE DE CONDUCTEUR ÉLECTRIQUE

(43) Veröffentlichungstag der Anmeldung: 16.05.2018
(73) Patentinhaber: Schleuniger Holding AG, 3608 Thun (CH)
(72) Erfinder: MESSINA, Carmelo, 6340 Baar (CH); FURRER, Jörg, 6048 Horw (CH); IMHOLZ, Klemens, 6300 Zug (CH); WIDMER, Roman, 8903 Birmensdorf (CH)
(74) Vertreter: Patentbüro Paul Rosenich AG

(56) Entgegenhaltungen:
- WO-A1-2008/152551
- WO-A2-2010/061303
- US-A- 5 361 653

## Beschreibung

Die Erfindung betrifft eine Vorrichtung zum Entfernen einer inneren Umhüllung elektrischer Leiter eines vorzugsweise mehradrigen Kabels, vorzugsweise einer zwischen einem Schirm oder einer Isolierung und den inneren Leitern befindlichen Folie, umfassend zumindest eine Halteanordnung/Klemmvorrichtung zum axialen und rotativen Klemmen des Kabels und einer um die Kabellängsachse drehbaren Messeranordnung, deren Messer auf die Kabelachse hin mit einer Kraft beaufschlagbar sind, gemäss dem Oberbegriff des Patentanspruchs 1, sowie ein Verfahren zum Entfernen einer inneren Umhüllung elektrischer Leiter eines mehradrigen Kabels, vorzugsweise einer zwischen einem Schirm oder einer Isolierung und den inneren Leitern befindlichen Folie, gemäss dem Oberbegriff des Patentanspruchs 10.

Die Litzen von Kabeln, insbesondere bei Kabeln mit mehreren Litzen, sind manchmal mit einer Folie umwickelt. Diese muss für die Bearbeitung der Litzen entfernt werden, was sehr schwierig sein kann, wozu der Wickelwinkel, die Dicke der Folie, das Folienmaterial, die Überlappung, etc. beitragen. Im Querschnitt gesehen stellt sich die Form der Folie nicht zwingend rund dar, da sie sich zumindest teilweise an die darunterliegenden Litzen anschmiegen kann, womit z.B. der Querschnitt bei einem Kabel mit vier Litzen einen Umriss etwa in Kleeblattform annimmt.

Herkömmliche Lösungen sehen beispielsweise einen "Blas-Bürst-Mechanismus" vor, wie er beispielsweise in der EP 2871734 A1 offenbart ist. Dabei ist eine buchsenförmige Aufnahme für das zu bearbeitende Ende des Kabels vorgesehen, ebenso wie ein axial in Bezug auf die Achse der zentralen Öffnung relativ zur Aufnahme bewegbarer Arbeitskopf, welcher zumindest eine zentrale, auf das Ende des Kabels ausgerichtete Druckluftdüse aufweist. Damit kann in sehr schonender Weise rasch die Folienumhüllung der inneren Leiter geöffnet werden, in dem sie durch den Druckluftstoss oder Druckluftstrom zum Aufplatzen oder zumindest zum Aufblähen gebracht wird. Mittels eines rotierenden Schneid- oder Fräskopfes, in dessen rotierender Achse vorzugsweise die Druckluftdüse und die zu dieser Druckluftdüse führende Druckluftzuleitung ausgearbeitet sind, kann die abgehobene Folie dann endgültig entfernt werden. Der Bearbeitungskopf kann auch mit einer axial ausgerichteten Ringschneide versehen sein, deren Umfang jenem der inneren Leiter entspricht.

In der CH 710236 A2 ist eine Ummantelschneidvorrichtung mit einem rotierenden Messer für einen Aussenisolator eines Kabels offenbart. Damit wird ein Einschnitt in einer Ummantelung einer elektrischen Leitung mit Isolationsummantelung vorgenommen, zu welchem Zweck ein Scheibenschneider, eine Hebeeinheit, die den Scheibenschneider in vertikaler Richtung anhebt und absenkt, und eine Querverlagerungseinheit, die den Scheibenschneider in Links-rechts-Richtung vor- und zurückfährt vorhanden. Der Scheibenschneider wird während des Einschneidens in die Ummantelung der elektrischen Leitung von der Hebeeinheit und der Querverlagerungseinheit verlagert, derart, dass er den Umfang der elektrischen Leitung umläuft, wobei unter Verlagerung eines Kontaktpunkts des Scheibenschneiders an der Ummantelung ein Einschnitt hergestellt wird. Der Umlauf ist einstellbar, jedoch wird nicht erläutert, auf welcher Grundlage bzw. mit welchen Parametern das Einstellen passiert.

Vielfach wurde auch schon vorgeschlagen, dass Folien mittels Laser abisoliert werden können, wie beispielsweise in der KR 101610306 B1 offenbart. Diese Methoden sind jedoch noch nicht vollwertig einsatzfähig.

Alle oben genannten herkömmlichen Lösungen sind nicht optimal für Kabel mit insbesondere unregelmässig geformtem Querschnitt geeignet. Verschiedenste Kabeltypen können gar nicht verarbeitet werden, und vielfach mangelt es an der für einen industriellen Einsatz geforderten Zuverlässigkeit und Prozesssicherheit. Auch die Lage der inneren Litzen kann ein Problem darstellen, insb. bei verdrillten Litzen in Kombination mit formschlüssigen Schneidevorrichtungen denn dort ist nicht klar, wo sich die Litzen befinden und wo die Räume dazwischen.

In der WO 2010/061303 A2 - als nächstliegender Stand der Technik - ist eine Vorrichtung zum Entfernen einer inneren Umhüllung elektrischer Leiter eines vorzugsweise mehradrigen Kabels offenbart, die zumindest eine Halteanordnung/Klemmvorrichtung zum axialen und rotativen Klemmen des Kabels und einer um die Kabellängsachse drehbaren Messeranordnung umfasst. Die Messer der Messeranordnung sind auf die Kabelachse hin mit einer Kraft beaufschlagbar, wobei die Klinge auf einem Messerarm positioniert ist, der an einer Befestigungsstelle an einem das Kabel umschliessenden und koaxial dazu orientierten und drehbaren Messerrad befestigt und um eine durch die Befestigungsstelle verlaufende und im Wesentlichen parallel zur Drehachse orientierte Achse schwenkbar ist.

Weitere derartige Vorrichtungen sind in der US 5,361,653 A oder der WO 2008/152551 A1 offenbart.

Es war daher die Aufgabe der vorliegenden Erfindung, eine Vorrichtung und ein Verfahren zum Entfernen einer inneren Umhüllung elektrischer Leiter eines vorzugsweise mehradrigen Kabels anzugeben, die hohe Zuverlässigkeit und Automatisierungsgrad aufweisen und für möglichst viele Kabeltypen geeignet sind.

Zur Lösung dieser Aufgabe ist eine Vorrichtung wie eingangs beschrieben erfindungsgemäss dadurch gekennzeichnet, dass das zumindest eine Messer eine zur Auflage auf der Oberfläche der inneren Umhüllung vorgesehene Tastfläche und direkt anschliessend eine über diese Tastfläche hinausragende Schneide aufweist, wobei die Tastfläche ebenfalls auf dem Messerarm positioniert ist, und dass der Messerarm mittels eines Magneten bewegbar und lösbar am Messerrad befestigt ist.

Hier wird also mittels eines um das Kabel rotierenden Messers die Folie geritzt und die abgeschnittenen oder zumindest eingeschnittenen Folienstücke über vorzugsweise einen eigenen Abzugsmechanismus entfernt. Das Ritzen der Folie ist kritisch, da das Messer einerseits so tief eindringen muss, dass die Folie jedenfalls reisst, jedoch darf das Messer wiederum nicht so tief eintauchen, dass darunterliegende Litzen verletzt werden. Dies wird durch das Zusammenspiel von Tastfläche und Schneide mit definiertem fixen Überstand über die Tastfläche sichergestellt, bei der die Tastfläche an der Aussenseite der Folie aufliegt und die Schneide in eine durch den fixen Überstand vorgegebene Tiefe in die Folie eindringt, vorzugsweise bis maximal zur Oberfläche der Litzen.

Da die Tastfläche und die Schneide auf einem Messerarm positioniert sind, ist eine optimale Nachführung des Messers entlang der Oberflächenkontur der folienbedeckten Litzen ermöglicht.

Da der Messerarm mittels eines Magneten bewegbar und lösbar am Messerrad befestigt ist, gestattet dies ein einfaches und rasches Auswechseln des Messerarms und damit auch des mit dem Messerarm verbundenen Messers mit Tastfläche.

Vorzugsweise ragt die Schneide des zumindest einen Messers um maximal die Dicke der Umhüllung über die Tastfläche des zumindest einen Messers hinaus, so dass die durch den fixen Überstand vorgegebene Tiefe des Einschnitts der Schneide bis maximal zur Oberfläche der Litzen reicht.

Gemäss einer weiteren vorteilhaften Ausführungsform der Erfindung ist vorgesehen, dass der Messerarm von der Befestigungsstelle am Messerrad zu einem in Bezug auf das Zentrum des Messerrades im Wesentlichen gegenüberliegenden Sektor des Messerrades verläuft, in welchem Sektor eine auf den Messerarm einwirkende Anordnung liegt, die eine den Messerarm in Richtung auf die Achse des Messerrades beaufschlagende, vorzugsweise konstante Kraft auf den Messerarm bewirkt. Die Kraft auf den Messerarm kann dadurch besonders gut dosiert und auch durch Ausnutzung der Hebelwirkung mittels gering dimensionierter Aktoren erzeugt werden.

Bevorzugt ist eine Ausführungsform der Erfindung, bei welcher die Anordnung einen Magneten beinhaltet, welcher eine den Messerarm beaufschlagende Kraft ausübt.

Um in einfacher und automatisierbarer Weise das Einführen des Kabels in die erfindungsgemässe Vorrichtung zu ermöglichen, ist eine erfindungsgemässe Ausführungsform vorgesehen, gemäss welcher ein ansteuerbarer Aktuator am Messerrad vorgesehen ist, welcher zur Beaufschlagung des Messerarms mit einer den Messerarm von der Achse des Messerrades wegbewegenden Kraft ausgelegt ist. Alternativ dazu könnte auch vorgesehen sein, dass ein ansteuerbarer Aktuator nahe dem Messerrad vorgesehen ist, welcher zur Fixierung des freien Endes des Messerarms ausgelegt ist, die Drehung des Messerrades jedoch nicht behindert.

Bevorzugt ist eine Variante der erfindungsgemässen Vorrichtung, bei der die Tastfläche und die Schneide auf einer vom Messerarm in Richtung auf das Zentrum des Messerrades ragenden Lasche oder Zunge ausgearbeitet sind. Dies ermöglicht es dem Messer der Kontur der über die Litzen gespannten Folie bestmöglich zu folgen, auch bei unregelmässigen Umfangskonturen. Vorzugsweise sind dabei die Tastfläche und die Schneide im Bereich eines konvexen Abschnittes des Messerarmes, der Lasche oder der Zunge ausgebildet, wodurch der genannte Vorteil noch besser zur Geltung gebracht werden kann. Besonders bevorzugt ist es dabei, dass die mit dem Kabel in Berührung kommende Tastfläche und die Schneide selbst konvex geformt sind, um dadurch der Umfangskontur der folienbedeckten Litzen besonders genau folgen zu können und dabei insbesondere in die Täler zwischen den Litzen möglichst tief einzudringen.

Zu Erhöhung der Prozesssicherheit und/oder der einfacheren Automatisierbarkeit kann als weiteres optionales Merkmal der Erfindung vorgesehen sein, dass die Schneide oder der Messerarm eine Codierung für charakteristische Eigenschaften der Schneide-Tastfläche-Messerarm-Anordnung und/oder als Marke für eine Referenzposition des Messerrades aufweist. Ergänzend ist dabei eine Abtasteinrichtung zur Abtastung der Codierung in die Vorrichtung integriert ist, und dass eine Auswerteeinheit in die Vorrichtung integriert ist, welche zum Empfang und zur Weiterverarbeitung des Signals der Abtasteinrichtung ausgelegt ist. Einerseits kann damit in einfacher Weise eine Prüfroutine realisiert werden, mit welcher sichergestellt werden kann, dass für jeden Kabeltyp das passende, optimale Messer verwendet wird. Alternativ oder ergänzend kann die Codierung aber auch als Referenzmarke zur Erkennung der Position des Messerrades herangezogen werden.

Da alleine durch das Schneiden die Folie meist nicht von den Litzen des Kabels entfernt werden kann, sieht eine bevorzugte Ausführungsform der erfindungsgemässen Vorrichtung vor, dass eine Abzugseinrichtung für die ab- oder eingeschnittenen Teile der Umhüllung in die Vorrichtung integriert und zum automatischen axialen Abziehen der Umhüllung ausgelegt ist. Vorteilhafterweise kommt dazu mindestens ein Klebeband oder ähnliches zum Einsatz, mit welchem eine kraftschlüssige Verbindung zu den geschnittenen Folienabschnitten hergestellt und diese dann in Richtung der Kabelachse abgezogen werden.

Das Abziehen der eingeschnittenen Folien wird braucht relativ viel Kraft. Diese Kraft ist schwierig auf die Folien zu übertragen. Hier kommt das Klebeband ins Spiel. Durch die Verwendung von vorzugsweise zwei Klebebändern wird die Folie auf den Litzen komplett umschlossen. Die Zugkraft auf dem Klebeband wird direkt auf die Folie übertragen. Diese erlaubt es, auch festsitzende Folien vom Kabel abzuziehen. Nur mittels Reibung kann die Folie nicht abgezogen werden, denn die Reibung zwischen dem Abzug und der Folie wäre in etwa gleich der Reibung zwischen Folie und Litzen. Nach dem Andrücken des Klebebandes braucht es keine andrückende Kraft mehr, die dem Abziehen entgegenwirken würde. Die Klebekraft wird zum Abziehen genutzt. Die abgezogenen Folien verbleiben auf dem Klebeband, welches kontinuierlich aufgewickelt wird. Es müssen also keine Folien-Resten aufgesaugt oder irgendwie anders entfernt werden.

Um auch noch letzte verbleibende Folienreste sicher entfernen zu können, ist gemäss einer weiteren vorteilhaften Ausführungsform der Erfindung eine Umhüllungs-Abschabanordnung in die Vorrichtung integriert. Diese Anordnung ist vorzugsweise zwischen der Abzugseinrichtung und der Messeranordnung positioniert.

Beim Abreissen der geritzten Folie bleiben allenfalls Folienreste am Kabel zurück. Diese werden mit einer Anordnung aus zentrisch schliessenden Formbacken zurückgestülpt.

Insgesamt ist es mit der erfindungsgemässen Vorrichtung in einfacher Weise möglich, das Entfernen der Folie zuverlässiger gestalten und damit die Prozesssicherheit zu erhöhen. Es ist möglich Folie von Kabel abisolieren, wo bisherige Lösungen versagt haben, der Aufwand für die Einstellung bzw. Justierung der Vorrichtung kann gering gehalten werden und die Möglichkeiten, um den Abisolierprozess zu beeinflussen sind erweitert. Alle Folien-Reste werden sauber entfernt.

Die eingangs gestellte Aufgabe wir auch gelöst durch ein Verfahren zum Entfernen einer inneren Umhüllung elektrischer Leiter eines mehradrigen Kabels, vorzugsweise einer zwischen einem Schirm oder einer Isolierung und den inneren Leitern befindlichen Folie. Dieses umfasst grundlegend das Klemmen des Kabels und das tangentiale Einschneiden der inneren Umhüllung im Zuge einer um die Kabellängsachse rotierenden Bewegung einer Messeranordnung mit gleichzeitiger Beaufschlagung der Messer auf die Kabelachse hin mit einer Kraft, wobei ein Kabelende durch die Messeranordnung hindurchgeschoben und fixiert wird, dass mittels einer um das Kabel rotierenden Bewegung der Messeranordnung die Umhüllung eingeschnitten und anschliessend axial abgezogen wird, wobei zumindest während der rotierenden Bewegung der Messeranordnung die Messeranordnung mit einer auf das Kabel hin gerichteten, vorzugsweise konstanten Kraft beaufschlagt wird, wobei die die Messeranordnung beaufschlagende Kraft magnetisch oder elektromagnetisch bewirkt wird.

Für bestimmte Kabeltypen hat es sich als vorteilhaft herausgestellt, wenn gemäss einer optionalen Variante die Rotationsbewegung der Messeranordnung zumindest einmal, vorzugsweise mehrmals, umgekehrt wird. Auch die Geschwindigkeit der Rotation des Messerrades, die Anzahl der Umläufe, deren Richtungsabfolge, allenfalls ein zweiter Schneidevorgang nach einem ersten Abziehen der Folie können das Ergebnis wesentlich verbessern.

Vorteilhafterweise kann bei dem erfindungsgemässen Verfahren auch vorgesehen sein, dass zu zumindest einem Zeitpunkt des Verfahrens eine Referenzposition angefahren wird, vorzugsweise nach Fixieren des Kabels und vor dem eigentlichen Schneidevorgang, wobei diese Referenzposition durch Auslesen einer Codierung auf einem der rotierenden Teile, vorzugsweise dem Messer oder Messerarm, ermittelt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Vorrichtung in perspektivischer Darstellung,
- Fig. 2: das Messerrad der erfindungsgemässen Vorrichtung separat und in grösserem Massstab, mit Messerarm in Explosionsdarstellung,
- Fig. 3: den Messerarm und als herausgestelltes Detail den Abschnitt mit Klinge und Tastfläche, in Draufsicht und in perspektivischer Darstellung, und
- Fig. 4: das Messerrad in eingebautem Zustand im Schneideteil der Vorrichtung, gemeinsam mit der Anordnung zum Öffnen des Messerarms sowie zur Positionsbestimmung des Messerrades.

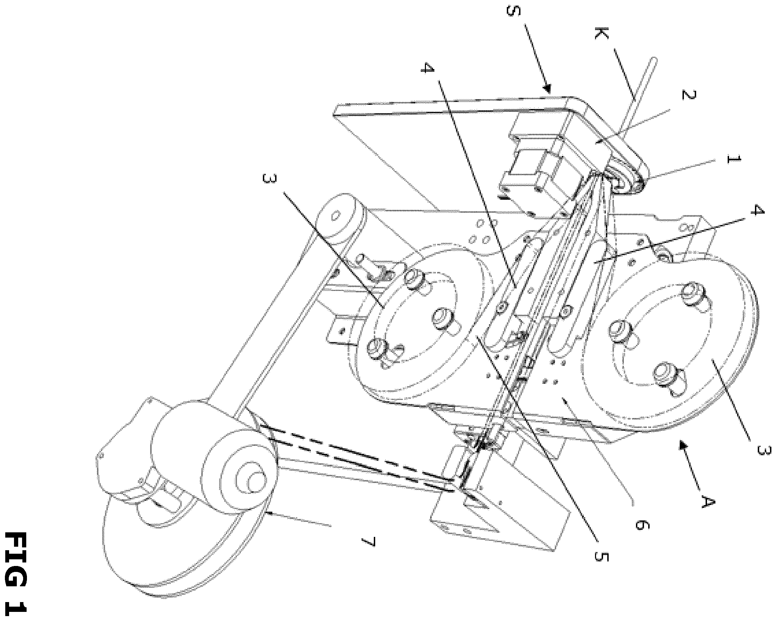

In Fig. 1 ist die erfindungsgemässe Vorrichtung in ihrer Gesamtheit dargestellt. Sie umfasst in der dargestellten Version die Baugruppen Schneidvorrichtung S mit zumindest einer Halteanordnung bzw. Klemmvorrichtung zum axialen und rotativen Klemmen des Kabels (nicht dargestellt), dem Messerrad 1 und Antrieb 2, der Abzugsvorrichtung A für die geschnittenen Folienabschnitte, mit zwei Klebebandrollen 3 zum Fassen der Folie, mit zwei Anpressbacken 4 für das Klebeband 5, beides auf einem verfahrbaren Schlitten 6 und einem Aufroller 7 für das Klebeband mit den Folienstücken. Eine Umhüllungs-Abschabanordnung (nicht dargestellt) könnte allenfalls auch in die Vorrichtung integriert sein.

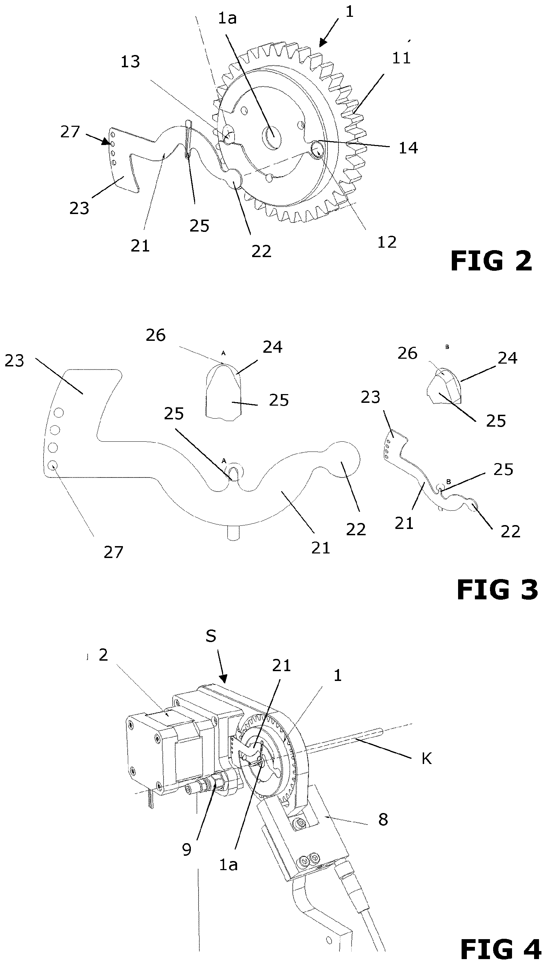

Das Messerrad 1 ist - wie in Fig. 2 zu erkennen - mit einem Zahnkranz am äusseren Umfang versehen, an welchem der Antrieb 2 angreift. Vorzugsweise einander bezüglich der Drehachse gegenüberliegend sind zwei Magnete 12, 13, vorzugsweise Stabmagnete, montiert. Der erste Magnet 12 ist mit seiner Achse parallel zur Achse des Messerrades 1 montiert und dient der schwenkbaren Befestigung des Messerarmes 21, in dem der Magnet 12 ein abgerundet ausgeführtes Ende 22 des Messerarms 21 als Schwenkpunkt des Messerarms 21 in die Anfräsung 14 des Messerrades 1.

Der zweite Magnet 13 ist gegenüber der Drehachse des Messerrades 1 um 45° geschwenkt montiert. Dadurch wird eine Radialkraft auf das dem Schwenkpunkt gegenüberliegende Ende 23 des Messerarmes 21 erzeugt, die diesen in Richtung auf die Drehachse des Messerrades 1 mit einer Kraft beaufschlagt. Diese Magnetkraft ergibt auch die Anpresskraft der Klinge 24 an das Kabel. Durch diese Anordnung der beiden Magnete 12, 13 kann der Messerarm 21 sehr einfach und schnell ausgewechselt werden, da er nur magnetisch in Position gehalten wird.

Am Ende einer vom mittleren Bereich des Messerarmes 21 in Richtung auf das Zentrum des Messerrades 1 ragenden Zunge 25 sind die Klinge 24 sowie eine polierte Tastfläche 26 angeordnet. Dies ist in Fig. 3 explizit dargestellt. Gegenüber der polierten Tastfläche 26 hat die Klinge 24 einen definierten Überstand. Je nach Kabel-Typ kann der vorzugsweise zwischen 0.03 bis 0.1 mm variieren. Das Messerrad 1 mit dem Messerarm 21 und der daran vorgesehenen Klinge 24 rotiert um das zentral durch das Messerrad 1 hindurchragende Kabel. Die Klinge 24 macht also eine schneidende Bewegung tangential zum Kabel, wobei sie nicht in die Folie gedrückt wird, sondern im Zuge der Drehbewegung in diese einschneidet. Durch die vorzugsweise runde, konvexe Form der Klinge 24 können auch die Täler der Folie zwischen den einzelnen Litzen von Kabeln mit mehreren parallelen oder auch verdrillten Litzen erreicht werden. Dies dadurch, dass der Radius der Klinge 24 kleiner ist, als der Radius des Folien-Tals. Die Folie wird von der Klinge 24 senkrecht zur Kabelachse eingeschnitten. Die definierte Schnitttiefe wird mittels eines durch die Tastfläche 26 gebildeten Anschlags immer eingehalten. Die Klinge 24 kann also nur so tief in die Folie eindringen wie der Überstand der Klinge 24 gegenüber der Tastfläche 26 ist.

Durch allenfalls mehrmaliges Umkehren des Drehsinns des Messerrades 1 (Pendelschritt) kann oftmals bei manchen Kabeltypen ein noch besseres Einschneiden der Folie erreichen werden.

Um sicherzustellen, dass ein Messerarm 21 mit der richtigen Klinge 24 im Messerrad 1 eingesetzt ist, ist vorzugsweise das Ende 23 des Messerarmes 21 mit einem Code versehen, der im dargestellten Ausführungsbeispiel als Binär-Code in Form einer Lochreihe 27 ausgeführt ist. Vier Löcher ergeben eine 4-Bit-Codierung. Es können also 16 verschieden Messerarme 21 detektiert werden. Damit kann die Steuerung überwachen, ob die richtige Kombination aus Klinge 24 und Tastfläche 26 eingesetzt ist. Es könnte aber auch ein Strichcode, ein QR-Code oder auch eine andere Art der Codierung über Farben etc. vorgesehen sein. Prinzipiell wäre auch ein Zahlencode denkbar, der über eine Kamera abgefragt wird.

Fig. 4 zeigt das Messerrad 1 in eingebauter Stellung, mit eingesetztem Messerarm 21, welches Messerrad 1 über den Antrieb 2 in Drehung versetzt werden kann. Der Binärcode 27 wird über einen Sensor, beispielsweise eine Lichtschranke 8, abgelesen. Damit können zwei Aufgaben erfüllt werden. Zuerst kann damit die Kante des Messerarms 21 detektiert werden, um die genaue Lage des Messerrades 1 zu definieren. Im Weiteren kann die Lichtschranke 8 nach dem Positionieren des Messerrades 1 erkennen ob sich eine Bohrung an der abgefragten Stelle des Klingenarmes befindet.

Weiters ist in Fig. 4 ein Anschlagzylinder 9 zu erkennen. Durch Ausfahren dieses Anschlagzylinders 9 in den Drehweg des Endes 23 des Messerarms 21 kann der Durchlass für das Kabel im Messerrad 1 freigegeben werden, indem das Messerrad 1 über einen Schrittmotor des Antriebs 2 in eine Position fährt, bei der der Messerarm 21 vom Zentrum des Messerrades 1 gegen die Kraft des Magneten 13 wegbewegt wird.

Die geschnittenen Abschnitte der Folie werden über eine Abzugseinrichtung A entfernt. Zu Beginn des Abzugsvorganges sind die beiden Andrückbacken 4 auseinandergefahren. Dadurch bilden die beiden Klebebänder 5 einen Trichter, welcher über das Kabelende bzw. die Folie geschoben wird. Nach dem Ritzen der Folie durch die Schneideinrichtung S drücken die beiden Backen 4 das Klebeband 5 an die Folie an. Die Klebebandrollen 3 werden zurückgezogen, die am Klebeband 5 anhaftende Folie wird dadurch von den Litzen abgezogen und verbleibt zwischen den Klebebändern 5. In der hinteren Stellung wird das Klebeband 5 geklemmt, die am Schlitte 6 wieder nach vorne fahrenden Klebebandrollen 3 werden um die Hublänge abgewickelt und der Ablauf kann von vorne beginnen.

Für manche Kabeltypen ist trotz optimaler Ausführung der Schneidevorrichtung S und der Abzugseinrichtung A keine komplette Entfernung der Folie möglich, so dass noch zwischen jeweils zwei benachbarten Litzen des Kabels ein kleines Dreieck der Folie zurückbleibt. Diese kann dann mittels einer weitere Einrichtung, einer Umhüllungs-Abschabanordnung in einem weiteren Arbeitsschritt zurückgeschoben werden. Diese beinhaltet einen zentrisch um das Kabel schliessenden Kopf, der mit um das Kabel dicht schliessende Formbacken ausgestattet ist. Nach deren Schliessen wird durch zumindest einen Druckluftstoss der Folien-Rest angehoben und anschliessend mit dem eng anliegenden Kopf zurückgeschoben. Damit können alle Kabeltypen befriedigend verarbeitet werden.

### Liste der Bezugszeichen

- 1: Messerrad
- 2: Antrieb
- 3: Klebebandrollen
- 4: Anpressbacken
- 5: Klebeband
- 6: Schlitten für Klebebandrollen und Anpressbacken
- 7: Aufroller für Klebeband
- 8: Lichtschranke
- 9: Anschlagzylinder
- 11: Aussenverzahnung am Messerrad
- 12: Stabmagnet
- 13: Magnet
- 14: Anfräsung
- 21: Messerarm
- 22: Schwenkende des Messerarms
- 23: Ende des Messerarms
- 24: Klinge
- 25: Zunge am Messerarm
- 26: Tastfläche
- 27: Codierung des Messerarms
- S: Schneidvorrichtung
- A: Abzugsvorrichtung

## Patentansprüche

1. Vorrichtung zum Entfernen einer inneren Umhüllung elektrischer Leiter eines vorzugsweise mehradrigen Kabels, vorzugsweise einer zwischen einem Schirm oder einer Isolierung und den inneren Leitern befindlichen Folie, umfassend zumindest eine Halteanordnung/Klemmvorrichtung zum axialen und rotativen Klemmen des Kabels und einer um die Kabellängsachse drehbaren Messeranordnung (1, 21), deren Messer auf die Kabelachse hin mit einer Kraft beaufschlagbar sind, wobei eine Klinge (24) auf einem Messerarm (21) positioniert ist, der an einer Befestigungsstelle an einem das Kabel umschliessenden und koaxial dazu orientierten und drehbaren Messerrad (1) befestigt und um eine durch die Befestigungsstelle verlaufende und im Wesentlichen parallel zur Drehachse orientierte Achse schwenkbar ist,
**dadurch gekennzeichnet, dass** das zumindest eine Messer (24, 26) eine zur Auflage auf der Oberfläche der inneren Umhüllung vorgesehene Tastfläche (26) und direkt anschliessend eine über diese Tastfläche (26) hinausragende Schneide (24) aufweist, wobei die Tastfläche (26) ebenfalls auf dem Messerarm (21) positioniert ist, und dass der Messerarm (21) mittels eines Magneten (12) bewegbar und lösbar am Messerrad (1) befestigt ist.

2. Vorrichtung nach Anspruch 1, **dadurch gekennzeichnet, dass** die Schneide (24) des zumindest einen Messers um maximal die Dicke der Umhüllung über die Tastfläche (26) des zumindest einen Messers hinausragt.

3. Vorrichtung nach Anspruch 1 oder 2, **dadurch gekennzeichnet, dass** der Messerarm (21) von der Befestigungsstelle am Messerrad (1) zu einem in Bezug auf das Zentrum des Messerrades (1) im Wesentlichen gegenüberliegenden Sektor des Messerrades (1) verläuft, in welchem Sektor eine auf den Messerarm (21) einwirkende Anordnung liegt, die eine den Messerarm (21) in Richtung auf die Achse des Messerrades (1) beaufschlagende, vorzugsweise konstante Kraft auf den Messerarm (21) bewirkt.

4. Vorrichtung nach Anspruch 3, **dadurch gekennzeichnet, dass** die Anordnung einen Magneten (13) beinhaltet, welcher eine den Messerarm (21) beaufschlagende Kraft ausübt.

5. Vorrichtung nach einem der Ansprüche 1 bis 4, **dadurch gekennzeichnet, dass** ein ansteuerbarer Aktuator am Messerrad (1) vorgesehen ist, welcher zur Beaufschlagung des Messerarms (21) mit einer den Messerarm (21) von der Achse des Messerrades (1) wegbewegenden Kraft ausgelegt ist, **oder dass** ein ansteuerbarer Aktuator (9) nahe dem Messerrad (1) vorgesehen ist, welcher zur Fixierung des freien Endes (23) des Messerarms (21) ausgelegt ist, die Drehung des Messerrades (1) jedoch nicht behindert.

6. Vorrichtung nach einem der Ansprüche 1 bis 5, **dadurch gekennzeichnet, dass** die Tastfläche (26) und die Schneide (24) auf einer vom Messerarm (21) in Richtung auf das Zentrum des Messerrades (1) ragenden Lasche oder Zunge (25) ausgearbeitet sind, wobei vorzugsweise die Tastfläche (26) und die Schneide (24) im Bereich eines konvexen Abschnittes des Messerarmes (21), der Lasche oder der Zunge (25) ausgebildet sind, wobei vorzugsweise die mit dem Kabel in Berührung kommende Tastfläche (26) und die Schneide (24) selbst konvex geformt sind.

7. Vorrichtung nach einem der Ansprüche 1 bis 6, **dadurch gekennzeichnet, dass** die Schneide (24) oder der Messerarm (21) eine Codierung (27) für charakteristische Eigenschaften der Schneide-Tastfläche-Messerarm-Anordnung und/oder als Marke für eine Referenzposition des Messerrades (1) aufweist, und **dass** eine Abtasteinrichtung (8) zur Abtastung der Codierung (27) in die Vorrichtung integriert ist, und dass eine Auswerteeinheit in die Vorrichtung integriert ist, welche zum Empfang und zur Weiterverarbeitung des Signals der Abtasteinrichtung (8) ausgelegt ist.

8. Vorrichtung nach einem der Ansprüche 1 bis 7, **dadurch gekennzeichnet, dass** eine Abzugseinrichtung für die ab- oder eingeschnittenen Teile der Umhüllung in die Vorrichtung integriert und zum automatischen axialen Abziehen der Umhüllung ausgelegt ist.

9. Vorrichtung nach Anspruch 8, **dadurch gekennzeichnet, dass** eine Umhüllungs-Abschabanordnung in die Vorrichtung integriert ist, vorzugsweise zwischen der Abzugseinrichtung und der Messeranordnung.

10. Verfahren zum Entfernen einer inneren Umhüllung elektrischer Leiter eines mehradrigen Kabels, vorzugsweise einer zwischen einem Schirm oder einer Isolierung und den inneren Leitern befindlichen Folie, umfassend das Klemmen des Kabels und das tangentiale Einschneiden der inneren Umhüllung im Zuge einer um die Kabellängsachse rotierenden Bewegung einer Messeranordnung mit gleichzeitiger Beaufschlagung der Messer auf die Kabelachse hin mit einer Kraft, wobei ein Kabelende durch die Messeranordnung hindurchgeschoben und fixiert wird, dass mittels einer um das Kabel rotierenden Bewegung der Messeranordnung die Umhüllung eingeschnitten und anschliessend axial abgezogen wird, wobei zumindest während der rotierenden Bewegung der Messeranordnung die Messeranordnung mit einer auf das Kabel hin gerichteten, vorzugsweise konstanten Kraft beaufschlagt wird, **dadurch gekennzeichnet, dass** die die Messeranordnung beaufschlagende Kraft magnetisch oder elektromagnetisch bewirkt wird.

11. Verfahren nach Anspruch 10, **dadurch gekennzeichnet, dass** die Rotationsbewegung der Messeranordnung zumindest einmal, vorzugsweise mehrmals, umgekehrt wird.

12. Verfahren nach einem der Ansprüche 10 oder 11, **dadurch gekennzeichnet, dass** zu zumindest einem Zeitpunkt des Verfahrens eine Referenzposition angefahren wird, vorzugsweise nach Fixieren des Kabels und vor dem eigentlichen Schneidevorgang, wobei diese Referenzposition durch Auslesen einer Codierung auf einem der rotierenden Teile, vorzugsweise dem Messer oder Messerarm, ermittelt wird.

## Claims

1. A device for removing an inner sheath of electrical conductors of a preferably multi-core cable, preferably a foil located between a shielding or an insulation and the inner conductors, comprising at least one holding arrangement / clamping device for axially and rotatably clamping the cable and a knife arrangement (1, 21) rotatable about the longitudinal axis of the cable, the knives of which can be subjected to a force on the cable axis, a blade (24) being positioned on a knife arm (21) which is fastened at a fastening point to a rotatable knife wheel (1) enclosing the cable and oriented coaxially thereto, and is pivotable about an axis running through the fastening point and oriented essentially parallel to the axis of rotation,
**characterized in that** the at least one knife (24, 26) has a touch surface (26) provided for resting on the surface of the inner sheath and directly thereafter a cutting edge (24) protruding beyond this touch surface (26), wherein the touch surface (26) is also positioned on the knife arm (21), and that the knife arm (21) is movable and detachably fastened to the knife wheel (1) by means of a magnet (12).

2. The device according to claim 1, **characterized in that** the cutting edge (24) of the at least one knife protrudes by a maximum the thickness of the sheath beyond the touch surface (26) of the at least one knife.

3. The device according to claim 1 or 2, **characterized in that** the knife arm (21) runs from the fastening point on the knife wheel (1) to a sector of the knife wheel (1) essentially opposite with respect to the center of the knife wheel (1), in which sector lies an arrangement acting on the knife arm (21), which arrangement causes a preferably constant force on the knife arm (21) which acts on the knife arm (21) in the direction of the axis of the knife wheel (1).

4. The device according to claim 3, **characterized in that** the arrangement includes a magnet (13) which exerts a force acting on the knife arm (21).

5. The device according to any one of claims 1 to 4, **characterized in that** a controllable actuator is provided on the knife wheel (1), which actuator is designed to act upon the knife arm (21) with a force moving the knife arm (21) away from the axis of the knife wheel (1) or that a controllable actuator (9) is provided near the knife wheel (1), which actuator is designed to fix the free end (23) of the knife arm (21), but does not hinder the rotation of the knife wheel (1).

6. The device according to one of claims 1 to 5, **characterized in that** the touch surface (26) and the cutting edge (24) are devised on a tab or tongue (25) protruding from the knife arm (21) in the direction of the center of the knife wheel (1), wherein the touch surface (26) and the cutting edge (24) are preferably formed in the region of a convex section of the knife arm (21), the tab or the tongue (25), wherein preferably the touch surface (26) coming into contact with the cable and the cutting edge (24) itself are formed convex.

7. The device according to any one of claims 1 to 6, **characterized in that** the cutting edge (24) or the knife arm (21) have a coding (27) for characteristic properties of the cutting edge - touch surface - knife arm arrangement and/or as a mark for a reference position of the knife wheel (1), and that a scanning device (8) for scanning the coding (27) is integrated in the device, and that an evaluation unit is integrated in the device, which is designed for receiving and further processing the signal of the scanning device (8).

8. The device according to any one of claims 1 to 7, **characterized in that** an extraction device for the cut or incised parts of the sheath is integrated in the device and is designed for automatic axial extraction of the sheath.

9. The device according to claim 8, **characterized in that** a sheath scraping arrangement is integrated in the device, preferably between the extraction device and the knife arrangement.

10. A method for removing an inner sheath of electrical conductors of a multi-core cable, preferably a foil located between a shielding or an insulation and the inner conductors, comprising the clamping of the cable and the tangential incision of the inner sheath in the course of a movement of a knife arrangement rotating about the longitudinal axis of the cable with simultaneous application of a force on the knives on the cable axis, wherein a cable end is pushed through the knife arrangement and fixed such that the sheath is incised by means of a movement of the knife arrangement rotating about the cable and then extracted axially, wherein at least during the rotating movement of the knife arrangement, the knife arrangement is subjected to a preferably constant force directed towards the cable, **characterized in that** the force acting on the knife arrangement is caused magnetically or electromagnetically.

11. The method according to claim 10, **characterized in that** the rotational movement of the knife arrangement is reversed at least once, preferably several times.

12. The method according to any one of claims 10 or 11, **characterized in that** a reference position is approached at least at one point in time of the method, preferably after fixing the cable and before the actual cutting process, wherein said reference position is determined by reading a coding on one of the rotating parts, preferably the knife or knife arm.

## Revendications

1. Dispositif pour retirer une gaine intérieure de conducteurs électriques d'un câble de préférence multiconducteur, un film se trouvant de préférence entre un blindage ou une isolation et les conducteurs intérieurs, comprenant au moins un dispositif de maintien/dispositif de serrage pour serrer axialement et en rotation le câble et un agencement de couteau pouvant tourner autour de l'axe longitudinal du câble (1,21), dont les couteaux peuvent être sollicités sur l'axe du câble avec une force, dans lequel une lame (24) est positionnée sur un bras de couteau (21), qui est fixé à un point de fixation à une roue de couteau rotative (1) qui entoure le câble et peut pivoter autour d'un axe passant par le point de fixation et orientée essentiellement parallèlement à l'axe de rotation,
**caractérisé en ce que** au moins un couteau (24, 26) a une surface tactile (26) prévue pour reposer sur la surface du boîtier intérieur et immédiatement après un tranchant (24) dépassant de cette surface tactile (26), dans lequel la surface tactile (26) est également positionnée sur le bras du couteau (21), et que le bras de couteau (21) est fixé de manière mobile et amovible à la roue de couteau (1) au moyen d'un aimant (12).

2. Dispositif selon la revendication 1, **caractérisé en ce que** le tranchant (24) du au moins un couteau fait saillie d'une épaisseur maximale de 25 de la gaine sur la surface tactile (26) du au moins un couteau.

3. Dispositif selon la revendication 1 ou 2, **caractérisé en ce que** le bras de couteau (21) part du point de fixation sur la roue de couteau (1) jusqu'à un secteur de la roue de couteau (1) qui est essentiellement opposé par rapport au centre de la roue de couteau (1), secteur dans lequel se trouve un dispositif agissant sur le bras de couteau (21), qui provoque une force de préférence constante sur le bras de couteau (21) qui agit sur le bras de couteau (21) en direction de l'axe de la roue de couteau (1).

4. Dispositif selon la revendication 3, **caractérisé en ce que** l'agencement comprend un aimant (13) qui exerce une force agissant sur le bras de couteau (21).

5. Dispositif selon une des revendications 1 à 4, **caractérisé en ce qu'**un actionneur pouvant être commandé est fourni sur la roue de couteau (1), qui est conçu afin de solliciter le bras de couteau (21) couteau est conçu avec une force éloignant le bras de couteau (21) de l'axe de la roue de couteau (1), ou qu'un actionneur pouvant être commandé (9) est prévu près de la roue de couteau (1), qui est conçu afin de fixer l'extrémité libre (23) du bras du couteau (21), mais ne gêne pas néanmoins la rotation de la roue de couteau (1).

6. Dispositif selon une des revendications 1 à 5, **caractérisé en ce que** la surface tactile (26) et le tranchant (24) sont usinés sur une languette ou un ergot (25) l'un des bras de couteau (21) dépassant dans la direction du centre de la roue de couteau (1), dans lequel de préférence la surface tactile (26) et le tranchant (24) sont réalisés dans la zone d'une section convexe du bras du couteau (21), de la languette ou de l'ergot (25), dans lequel de préférence la surface tactile (26) venant en contact avec le câble et le tranchant (24) sont eux-mêmes façonnés de manière convexes.

7. Dispositif selon une des revendications 1 à 6, **caractérisé en ce que** le tranchant (24) ou le bras de couteau (21) présente un codage (27) pour les propriétés caractéristiques du dispositif de bras de couteau - surface tactile - tranchant et/ou comme une marque pour une position de référence de la roue de couteau (1), et qu'un dispositif de balayage (8) pour balayer le codage (27) est intégré dans le dispositif, et qu'une unité d'évaluation est intégrée dans le dispositif, qui est conçue pour recevoir et traiter ultérieurement le signal du dispositif de balayage (8) .

8. Dispositif selon une des revendications 1 à 7, **caractérisé en ce qu'**un dispositif de retrait pour la ou les parties incisées du boîtier est intégré dans le dispositif et est conçu pour un retrait axial automatique du boîtier.

9. Dispositif selon la revendication 8, **caractérisé en ce qu'**un agencement de grattage de gainage est intégré dans le dispositif, de préférence entre le dispositif d'extraction et l'agencement de couteau.

10. Procédé pour retirer une gaine intérieure de conducteurs électriques d'un câble multiconducteur, de préférence un film se trouvant entre un blindage ou une isolation et les conducteurs intérieurs, comprenant le serrage du câble et la découpe tangentielle de la gaine intérieure au cours d'un mouvement d'un ensemble de couteaux tournant autour de l'axe longitudinal du câble avec application simultanée d'une force au couteau sur l'axe du câble, dans lequel une extrémité de câble étant poussée à travers l'agencement de couteaux et fixée au moyen d'un mouvement de l'agencement de couteau tournant autour du câble, la gaine est coupée puis retirée axialement, dans lequel au moins pendant le mouvement de rotation de l'agencement de couteau l'agencement de couteau est soumis à une force de préférence constante dirigée vers le câble, **caractérisé en ce que** la force agissant sur l'agencement de couteau est suscitée magnétiquement ou électromagnétiquement.

11. Procédé selon la revendication 10, **caractérisé en ce que** le mouvement de rotation de l'agencement de couteau est inversé au moins une fois, de préférence plusieurs fois.

12. Procédé selon une quelconque des revendications 10 ou 11, **caractérisé en ce qu'**une position de référence est démarrée à au moins un point temporel du procédé, de préférence après la fixation du câble et avant le processus de coupe proprement dit, dans lequel cette position de référence est déterminée en lisant un code sur l'une des pièces tournantes, de préférence le couteau ou le bras de couteau.
